(19) Europäisches Patentamt
European Patent Office
Office européen des brevets

(11) **EP 0 411 546 B2**

(12) **NEW EUROPEAN PATENT SPECIFICATION**

(45) Date of publication and mention
of the opposition decision:
**02.06.1999 Bulletin 1999/22**

(45) Mention of the grant of the patent:
**06.07.1994 Bulletin 1994/27**

(51) Int. Cl.$^6$: **B01D 39/16**
// A47J31/06

(21) Application number: **90114625.8**

(22) Date of filing: **30.07.1990**

(54) **Coffee filter material and coffee filter bag**

Kaffeefiltermaterial und Kaffeefilterbeutel

Matériau filtrant ainsi que sachet filtrant pour le café

(84) Designated Contracting States:
**AT BE CH DE DK ES FR GB GR IT LI LU NL SE**

(30) Priority: **01.08.1989 JP 198001/89**
**29.12.1989 JP 340575/89**
**02.05.1990 JP 115191/90**

(43) Date of publication of application:
**06.02.1991 Bulletin 1991/06**

(73) Proprietors:
• **YAMANAKA INDUSTRY CO., LTD.**
**Kyoto-shi, Kyoto (JP)**
• **Kuraray Co., Ltd.**
**Kurashiki-shi Okayama-ken (JP)**

(72) Inventors:
• **Tsuji, Hiroshi**
**Toyonaka-shi, Osaka (JP)**
• **Saisaka, Hiromasa**
**Izumiotsu-shi, Osaka (JP)**
• **Murakami, Hideo**
**Sakyo-ku, Kyoto-shi, Kyoto (JP)**
• **Suzuki, Kaichi**
**Kyoto-shi, Kyoto (JP)**
• **Fukuchi, Masaaki**
**Kyoto-shi, Kyoto (JP)**

(74) Representative:
**Klunker . Schmitt-Nilson . Hirsch**
**Winzererstrasse 106**
**80797 München (DE)**

(56) References cited:
**EP-A- 0 170 461**        **FR-A- 1 473 574**
**US-A- 3 640 727**

EP 0 411 546 B2

## Description

The present invention relates to a bag-shaped member for a coffee filter bag and to a coffee filter bag. More particularly, the present invention relates to a bag shaped member for a coffee filter bag for obtaining a high-quality coffee extract, and to a coffee filter bag formed by using this bag shaped member.

Various coffee extraction methods, such as a siphon method using an extracting tool, an espresso method, a meliol method, and a drip method are known, and the drip method is currently most widely used.

The flannel drip extraction method is most generally adopted, wherein a 40-count flannel formed by raising a thick woven cotton fabric is used for a filter bag for separating a coffee extract from coffee powder during a filtration extraction of coffee. This filter cloth, however, is thick, and if used over a long period, clogging occurs and coffee fat is adhered to the filter cloth, with the result that the filter cloth is contaminated, discolored, and impregnated with a smell. Accordingly, after the filter cloth is used, it must be washed with water, and should be immersed in water before using it again, and thus, for reasons of sanitation, great care is necessary. Accordingly, the flannel drip type extraction method is limited with regard to business use or for use by specific persons.

Furthermore, the paper drip type extraction method is defective in that, since a thick filter paper is generally used, a long time is' required for the filtration and extraction. Although the paper drip extraction method is used for a small number of persons, if the amount of coffee powder is small, the filtration area is small, and thus hot water must be frequently and uniformly poured thereover, for an extraction of all of the coffee, and the required quantities of hot water must be measured in advance. Namely, many preliminary operations must be conducted before the extraction operation, and the extraction loss and extraction unevenness are conspicuous, and further, the temperature of the hot water is lowered during the extraction operation and thus it is necessary to reheat the water.

As pointed out above, a paper filter sheet or a nonwoven fabric filter sheet is generally used as the filter material for the extraction of coffee, and some of these conventional filter sheet materials for the extraction of coffee are not satisfactory because the effect of filtering and removing coffee particles (solids) is excessively high, the concentration or flavor of the obtained coffee extract is insufficient, and a long time is required for the extraction. Other conventional sheet materials are disadvantageous in that, since the effect of filtering and removing coffee particles is excessively low, the obtained coffee extract contains large-quantities of solid coffee particles, and the flavor or taste is degraded and precipitates are formed.

If a fine powder of coffee is extracted with hot water, an oil and fat component in the fine powder of coffee is additionally extracted, and thus a filter sheet material for extraction of coffee is required to appropriately remove this oil and fat component by adsorption.

Before the present invention, however, the filtering characteristics that should be possessed by a coffee filter sheet material for obtaining a high-quality coffee extract from a fine powder of coffee were little known.

For example, Japanese unexamined utility Model Publication Nos. 55-129667, 55-129668 and 55-129669 disclose a coffee bag formed of a filter sheet in which the distribution density of filtering fine pores having a pore size of 80 $\mu$m or more is limited to 6 pores or less per cm$^2$. In this coffee bag, however, only a conventional nonwoven fabric capable of substantially inhibiting a permeation of relatively large particles having a particle size of 80 $\mu$m or more is used, and this coffee bag is still unsatisfactory as a filter material for fine particles of coffee. Moreover, with this coffee bag, to prevent a leakage of fine coffee particles, a preliminary treatment of separating and removing fine particles is necessary, and therefore, a utilization of components extracted from fine coffee particles is impossible. Still further, the extraction operation is complicated. Accordingly, this coffee bag is not completely satisfactory for obtaining a high-quality coffee extract.

JP-A-62-83896 discloses steeping bags and pouch-shaped packaging material made from two layers of nonwoven fabric which are spot-bonded to each other at locations at the walls of the bags. For bonding the two layers thermal bonding, bonding with a resin or mechanical interlacing based on needle punching is disclosed. The bonding serves for holding the two layers together.

EP-A-0 170 461 discloses brewing bags, e.g. for coffee filtering, made from a polymeric nonwoven fiber material. In order to prevent sorption of flavour oils by the filter bag material, the material is treated with a water-soluble, fluoro-chemical sizing agent. Furthermore, the filter bags do not comprise fiber-fuse-bonded areas.

GB-A-2 132 939 discloses a medical wrap comprising a melt blown microfiber matt made from polypropylene and a reinforcing web, the polypropylene microfiber matt and the reinforcing web being welded together at discrete spots. The document does not contain any teaching with respect to problems associated with filtering, in particular with coffee filter bag extraction.

The object of the present invention is to provide a bag-shaped member for a coffee filter bag capable of appropriately filtering coffee fine particles at the extraction of coffee and appropriately adsorbing and collecting an oil and fat extract component, and thus suitable for obtaining a high-quality coffee extract, and a coffee filter bag formed by using this bag-shaped member.

The above object can be attained by the bag-shaped member for a coffee filter bag having the features of claim 1.

The bag-shaped member comprises a layer of a filter melt blown nonwoven fabric composed of polypropylene fibers having the features as acknowledged in the pre-characterizing portion of claim 1. Such fabric is available as Tapyrus of Tonen Corp., Japan. For promoting the permeation of hot water the bag-shaped member is formed as indicated in the characterizing portion of claim 1.

Specific embodiments of the invention are claimed in the dependent claims.

A coffee filter bag in accordance with the present invention comprises a bag-shaped member as mentioned above, a coffee powder contained in the bag-shaped member, and a hanging member fixed on at least one end portion thereof to the bag-shaped member.

BRIEF DESCRIPTION OF THE DRAWINGS

Figure 1 is a graph illustrating the filtering performances of the coffee filter composite material used for the present invention to coffee fine particles;

Figs. 2 and 3 are graphs showing the filtering performances of conventional extraction filter materials to coffee fine particles;

Fig. 4 is a front view illustrating an embodiment of the coffee filter bag of the present invention;

Fig. 5 is an explanatory cross-sectional side view illustrating the coffee filter bag shown in Fig. 4;

Fig. 6 is an explanatory cross-sectional view illustrating an embodiment of the melt blown polypropylene nonwoven fabric for the fibrous filter layer, which is usable for the present invention;

Figs. 7 to 10 are respectively an explanatory diagram showing an example of the shape and arrangement of fiber fuse-bonded areas formed in the front and back surface portions of the bag-shaped member usable for the coffee filter bag of the present invention; and,

Fig. 11 is an explanatory sectional view illustrating another embodiment of the nonwoven fabric for the fibrous filter layer, which is usable for the present invention.

DESCRIPTION OF THE PREFERRED EMBODIMENTS

Generally, where coffee is extracted by using a filter material, if the volume average particle size of coffee fine, particles which have permeated through the filter material and are contained in the coffee extract is 3 to 20 $\mu$m, preferably 5 to 10 $\mu$m, the obtained coffee extract has a high transparency, precipitates are not formed or little formed in the extract, and the coffee extract has a high grade and a good flavor. A filter material is required to enable a preparation of such a high-quality coffee extract in a short extraction time.

The bag-shaped member for a coffee filter bag of the present invention can satisfy this requirement. A filter nonwoven fabric is used in the fibrous filter layer of the bag-shaped member which satisfies the requirements represented by the below-mentioned relationships (1) through (4) and is capable of adsorbing at least 0.5 g/g of an oil and fat component extracted from coffee.

(1): The basis weight x of the filter nonwoven fabric satisfies the relationship of $3 \leqq x \leqq 30$. If this basis weight x is smaller than 3 g/m$^2$, the capacity of capturing fine particles is too low, and it is difficult to prepare the nonwoven fabric having such a small basis weight. If the basis weight x is larger than 30 g/m$^2$, the coffee extraction speed is extremely low.

(2): In the filter nonwoven fabric, the cumulative (total) volume value y of fine pores in the filter nonwoven fabric, measured by a mercury porosimeter, satisfies the relationship of $y \geqq 0.2x$. If the value y is smaller than 0.2x, the coffee extraction speed of the obtained filter material is too low. Accordingly, if the value x is increased, this disadvantage of a reduction of the extraction speed occurs unless the value y is proportionally increased. In general, the relationship of $y \geqq 0.2x$ (2) should be established between x and y, as pointed out above, but preferably the relationship of $y \geqq 0.25x$, especially $y \geqq 0.3x$, is satisfied.

(3) and (4): The values ($\mu$m) of $r_{30}$ and $r_{70}$ satisfy the relationships of $1 \leqq r_{30}$ and $r_{70} \leqq 50$, respectively. If $r_{30}$ is smaller than 1 $\mu$m, the filtration speed of the filter material is too low, and if $r_{70}$ is larger than 50 $\mu$m, the particle size of the coffee fine particles permeated through the resultant filter material is too large, and the amount of such particles is too large, with the undesirable result that the coffee extract becomes turbid and the amount of precipitates is increased. It is generally preferred that the relationships $3 \leqq r_{30}$ and $r_{70} \leqq 40$, especially $5 \leqq r_{30}$ and $r_{70} \leqq 30$, are satisfied.

When the maximum fine pore radius ($\mu$m) observed when the volumes of the fine pores in the filter nonwoven

3

fabric are cumulated from the small pore radius side, and the cumulative volume value becomes equal to 0.5y, is expressed as $r_{50}$, preferably, in the filter nonwoven fabric used in the present invention, the relationship of $3 \leqq r_{50} \leqq 40$, especially $5 \leqq r_{50} \leqq 30$, is established. Particularly preferably, the relationship of $7 \leqq r_{50} \leqq 20$ is satisfied.

As the diameter of the fiber constituting the nonwoven fabric increases, the fine pore radius distribution is biased to the large radius side, and as the fiber radius decreases, the fine pore radius distribution is biased to the small radius side. When the comparison is made based on the same fiber size, as the total pore volume increases, the fine pore radius distribution is biased to the large radius side.

In the filter nonwoven fabric usable for the present invention in the wet state thereof, the adsorption of the oil and fat component from the coffee extract must be at least 0.5 g/g on a dry fiber basis in the wet state. If the oil and fat component adsorption is smaller than 0.5 g/g, an oil film floats on the surface of the obtained coffee extract, and the quality and flavor of the coffee extract are poor. Preferably, the oil and fat component adsorption is at least 1 g/g, especially at least 2 g/g.

The oil and fat component adsorption of the filter nonwoven fabric depends on the type and size of the fiber constituting the filter nonwoven fabric. In general, the oil and fat component adsorption becomes smaller in order of a polypropylene fiber, a polyethylene fiber, a polyester fiber, a nylon fiber, and a cellulose fiber.

The filter melt blown nonwoven fabric used in the present invention is formed of polypropylene fiber, and the average diameter of the polypropylene fiber is 15 μm or less, preferably 5 μm or less.

The filter nonwoven fabric is prepared from the above-mentioned polypropylene fibers by melt blowing. The filter nonwoven fabric has a uniform fiber distribution and a uniform density, and accordingly, the filter nonwoven fabric has uniform filtering characteristics.

If the fibrous filter layer is prepared from a sheet material other than a nonwoven fabric, such as a woven fabric or a knitted fabric, the distribution of the filtering pores becomes uneven. If the nonwoven fabric is formed from inorganic fibers, an effect of appropriately removing the oil and fat component contained in the coffee extract cannot be obtained.

If the organic synthetic fibers have an average diameter exceeding 30 μm, it is difficult to control the filtering characteristics of the resultant filter nonwoven fabric as satisfactorily as in the present invention, and the effect of removing the oil and fat component becomes insufficient.

The polypropylene fibers used for the formation of the filter nonwoven fabric of the present invention can be either continuous filaments or short fibers. When fibers composed of polypropylene are used, the oil and fat component in the coffee extract can be appropriately adsorbed and removed by the resultant filter material. Therefore, fibers of this type are used for the formation of the filter nonwoven fabric for the fibrous filter layer of the present invention.

In view of the uniformity of the distribution of the filtering fine pores, the nonwoven fabric is prepared by the melt blow process. The average diameter of the polypropylene fibers can be determined by measuring the diameters of fibers having a length of at least about 5 mm by an electron microscope, and calculating the mean value of the measured values. A small amount of other fibers, for example, cellulose fibers can be allowed, as long as the filtering property is not substantially influenced.

In the bag shaped member for a coffee filter bag of the present invention, a supporting layer comprising at least one sheet of a reinforcing fabric having no substantial influence on the filtering property, of the fibrous filter layer can be laminated and combined with the fibrous filter layer to form an integrated composite sheet material.

The supporting layer is composed of at least one porous material selected from woven fabrics, knitted fabrics, mesh fabrics, net-like sheets, and nonwoven fabrics, and the supporting layer has many filtering pores coarser than those of the fibrous filter layer and gives a practically sufficient mechanical strength to the filter material of the present invention.

The type of the fibers constituting the supporting layer is not particularly critical, but the fibers are generally selected from natural fibers (for example, cotton), regenerated fibers (for example, rayon and cupra), semi-synthetic fibers (for example, acetate fibers), and synthetic fibers (for example, polyester, polyamide, polyolefin and polyacrylic fibers). The thickness of the individual fibers is not particularly critical. The fibers constituting the supporting layer can be either continuous filaments or short fibers.

It is generally preferred that the fibers in the supporting layer are not swollen with water and are partially fusion-bonded, so that the filtering pore size is not changed at the extraction of coffee.

It is also preferred that, when the coffee filter material is subjected to the extraction of coffee and the particle size distribution of fine particles of coffee which have permeated through this filter material and have a particle size 50 μm or less is measured and volumes of the coffee fine particles having respective particle sizes are cumulated in order from the small particle size side to the large particle size side, the maximum size of the coffee fine particles in the fraction on the small particle size side of the coffee fine particles which fraction occupies 50% of the total volume of the coffee particles, that is, the volume average size of the coffee fine particle determined from the particle size distribution of the coffee fine particles having a particle size of 50 μm or less, are within a range of from 5 to 10 μm.

If this volume average particle size is smaller than 5 μm, this coffee filter material has a very poor coffee particle permeability and a long time is required for the filtration, and thus the concentration of the obtained coffee extract is insufficient and a good flavor cannot be obtained. Where this volume average particle size is larger than 10 $\mu$m, the coffee particle permeability of this coffee filter material becomes too high and the concentration of the obtained coffee extract becomes too high, and thus a precipitation of the coffee particles occurs and the flavor is not satisfactory.

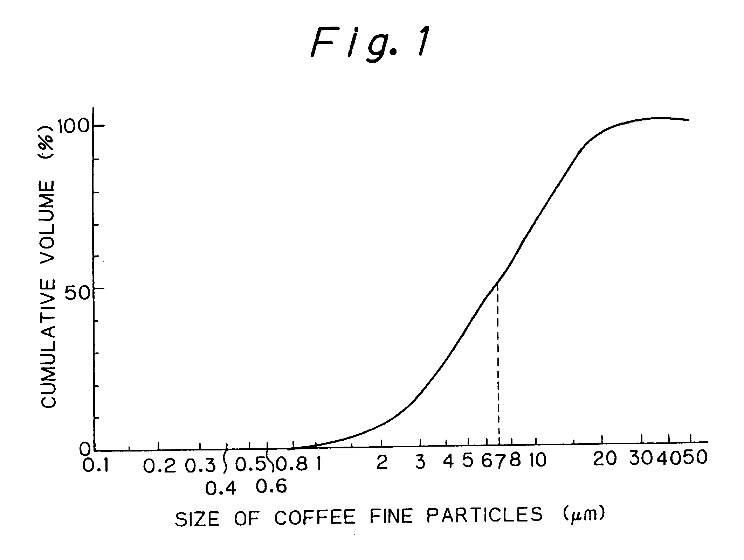

When the bag shaped member for a coffee filter bag of the present invention is used for the extraction of coffee and when with respect to fine particles which have permeated through this filter material and have a particle size of 50 $\mu$m or less, volumes of fine particles having respective particle sizes are measured by a particle size distribution-measuring machine, the volumes of the fine particles having the respective particle sizes are cumulated from the small particle size side to the large particle side and percent ratios of the cumulative values to the total volume of the fine particles which have permeated through the filter material are calculated, a graph, for example, as shown in Fig. 1 is obtained. In Fig. 1, when the cumulative value of the volumes in the fine particle fraction on the small particle size side among the coffee fine particles which have permeated through the filter material reaches 50%, the maximum particle size in this fine particle fraction is about 7 $\mu$m.

The bag shaped member for a coffee filter bag of the present invention is characterized in that the filtration can be performed at an appropriate filtration speed, a precipitation of coffee particles does not occur in the obtained coffee extract, and the obtained coffee extract has an appropriate concentration and a good flavor.

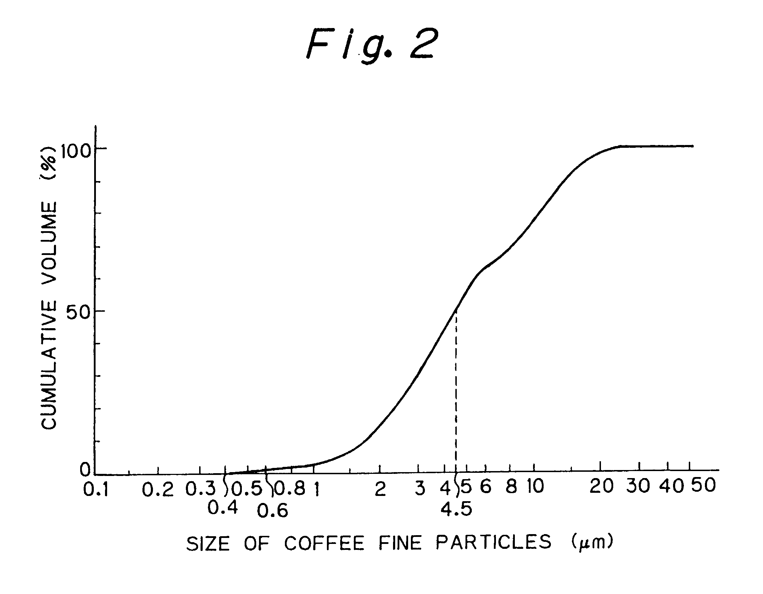

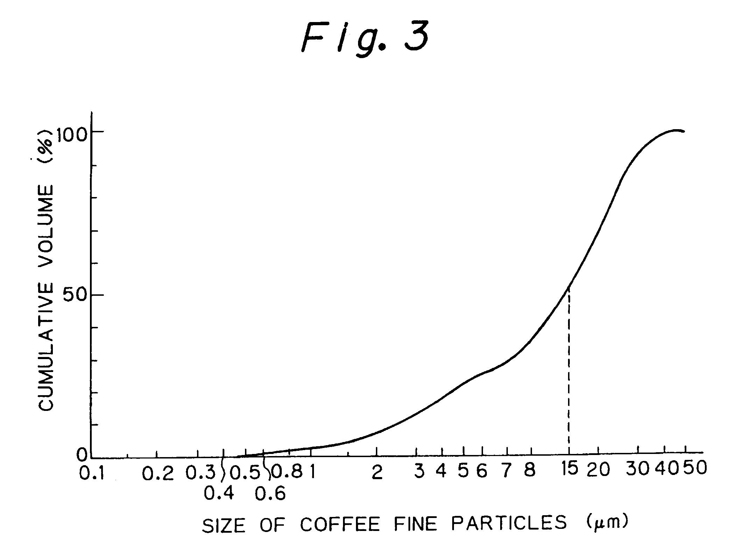

In contrast to the bag shaped member for a coffee filter bag of the present invention having the filtering characteristics shown in Fig. 1, the conventional coffee filter materials show filtering characteristics as shown in Figs. 2 and 3.

Figure 2 illustrates an example of the relationship between the particle size of permeated coffee fine particles and the cumulative volume percentage of the permeating coffee fine particles, observed when the conventional drip coffee filter material is used for the extraction of coffee. In Fig. 2, the maximum particle size of fine particles in the fine particle fraction on the small particle size side, which occupies 50% of the total volume of the permeated coffee fine particles, is 4.5 $\mu$m. In this coffee filter material, since the filtering fine pores are too small, the taste of the obtained coffee extract is flat and a long time is required for the extraction.

Figure 3 shows an example of the relationship between the particle size of permeated coffee fine particles and the cumulative volume percentage of the permeated coffee fine particles, observed when an ordinary nonwoven fabric filter material used for an extraction bag or the like is used for the extraction of coffee. In Fig. 3, the maximum particle size of fine particles in the fine particle fraction on the small particle size side, which occupies 50% of the total volume of the permeating coffee fine particles, is about 15 $\mu$m. Since this filter material has many filtering fine pores having an excessively large pore size, a precipitation of coffee particles exists in the obtained coffee extract and the flavor of the coffee extract is not satisfactory. Moreover, the adsorptive capture of the oil and fat component is insufficient, and sometimes, an oil and fat film is formed on the liquid surface.

Preferably, the coffee filter material of the bag shaped member of the present invention has an air permeability of 10 to 250 $cm^3/cm^2 \cdot sec$, more preferably 15 to 200 $cm^3/cm^2 \cdot sec$.

In general, a filter bag should have an appropriate liquid permeability (flux). If the liquid permeability is insufficient, a long time becomes necessary for the extraction of coffee, and the filter material is not practically useful. If the flux is too large, this means that the filter material has many filtering pores having too large a pore size, and too many fine particles permeate through the filter material.

If the extraction of coffee is carried out by using a coffee filter bag made of the bag-shaped member of the present invention having an air permeability of 10 to 250 $cm^3/cm^2 \cdot sec$, fine powder of coffee is appropriately filtered.

If the air permeability of the filter material of the bag-shaped member exceeds 250 $cm^3/cm^2 \cdot sec$, even coarse particles in fine powder of coffee permeate through the obtained filter bag. If the air permeability of the sheet material is lower than 10 $cm^3/cm^2 \cdot sec$, the permeation of fine powder of coffee is excessively restricted. To obtain the air permeability within the above-mentioned range, the filter material must have a basis weight of 3 to 30 $g/m^2$, as pointed out hereinbefore.

When a composite sheet material as mentioned above is used for forming the bag shaped member of the present invention, the supporting layer is laminated and combined with the fibrous filter layer according to an appropriate method. For this lamination a heat fusion bonding method is used. In the heat fusion bonding method, the supporting layer is locally fusion-bonded to the fibrous filter layer through at least one fusion bonding area. In this fusion bonding area, a portion of the fibers in one of the supporting layer and the fibrous filter layer is fusion-bonded to the other layer, whereby both the layers are bonded to each other. Furthermore, the fibrous filter layer can have at least one fiber-fusion-bonded area. In this fiber-fusion-bonded area, a portion of the integrated and interlaced polypropylene fibers is fusion-bonded to the other portion of the polypropylene fibers in the fibrous filter layer, whereby movement or falling of the polypropylene fibers during the extraction of coffee is prevented, the dimensional change of the fibrous filter layer, such as contraction or elongation, is prevented, and the filtering characteristics of the coffee filter material can be kept uniform.

The numbers, shapes and distribution states of the fusion bonding area between the two layers and the fiber-fusion-bonded area of the fibrous filter layer are not particularly critical, and can be appropriately set, as long as the intended object of the present invention can be attained.

The coffee filter material is formed into an optional shape or dimension according to the intended use and the extraction conditions. In the present invention, the coffee filter material takes the form of an extraction bag.

When the bag shaped member for a coffee filter bag is prepared according to the present invention from the coffee filter material comprising the fibrous filter layer and the supporting layer, the fibrous filter layer may be disposed either on the filtration primary side (coffee powder side) or the filtration secondary side (coffee extract side). If the fibrous filter layer is arranged on the filtration primary side, the filtering pores are clogged by the coffee fine particles, and the coffee particles are appropriately steam-aged on the filtration primary side. In the coffee filter bag, if the supporting layer is arranged on the filtration secondary side, the permeation of hot water into the bag is accelerated and the extraction operation is promoted. Furthermore, the fibrous filter layer arranged on the filtration primary side shows an appropriate effect of adsorbing and capturing the oil and fat component in the extract, whereby a degradation of the appearance of the surface of the coffee extract by a rising of the oil and fat component can be prevented, and an appropriate taste and flavor can be given to the coffee extract.

The coffee filter bag obtained according to the present invention comprises a bag-shaped member as set forth above, which comprises confronting front and back surface portions and a closed peripheral portion thereof, a coffee powder contained in the bag-shaped member, a hanging member fixed to the bag-shaped member on at least one end portion thereof, and at least one fiber-fused area formed on each of the front and back surface portions.

Each of the front and back surface portions or this filter bag may be formed solely of the above-mentioned fibrous filter layer composed of the filter nonwoven fabric, or may be formed of the composite sheet material obtained by laminating and combining the above-mentioned fibrous filter layer with a reinforcing fabric.

The structure of the coffee filter bag will now be described with reference to the accompanying drawings.

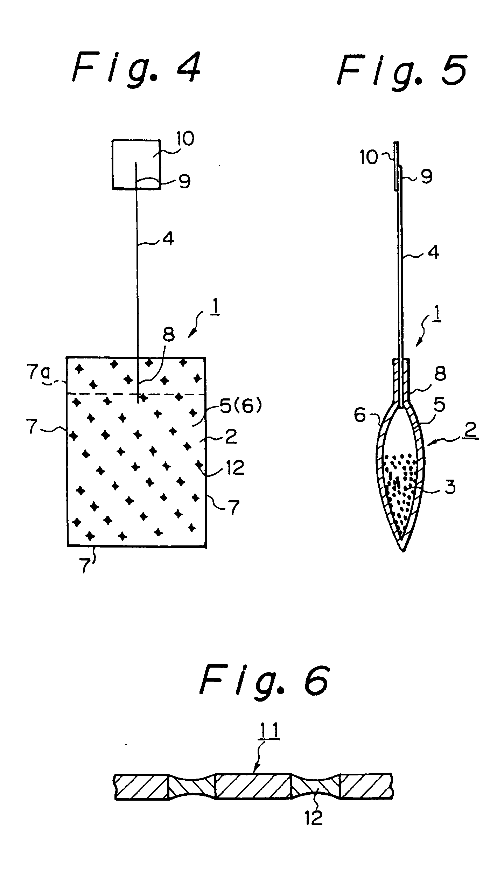

Referring to Figs. 4 and 5, the extraction bag 1 of the present invention comprises a bag-shaped member 2, a coffee powder 3 contained in the bag-shaped member 2, and a hanging member 4.

The bag-shaped-member 2 has confronting front and back surface portions 5 and 6 and a closed peripheral portion 7 thereof, and especially, the top end portion of the bag-shaped member 2 is closed at a part 7a indicated by a dotted line in Fig. 4, after the coffee powder 3 has been filled. Of course, the position and mode of this top end closed part are not limited to those shown in Fig. 4.

The size of the bag-shaped member is not particularly critical, but preferably the length of the bag-shaped member is 7 to 10 cm, and the width of the bag-shaped member is 4 to 8 cm, to provide a sufficient amount of coffee for one person.

In the embodiment shown in Figs. 4 and 5, the hanging member 4 consists of a thread or a cord, and is bonded at a lower end portion 8 thereof to the bag-shaped member 2 and the remaining portion extends beyond the bag-shaped member. The lower end portion 9 of the hanging member 4 can be fixed to a gripping piece 10, and the gripping piece has an optional shape or size and is formed of a paper or plastic sheet. In another embodiment of the hanging member, for example, both end portions are fixed to the bag-shaped member and the remaining portion extends over the bag-shaped member in the form of a loop.

The type and particle size of coffee powder contained in the bag-shaped member are not particularly critical, but roasted, medium ground powder is generally preferably used. Preferably the pulverization degree is such that particles having a size of 1 to 0.5 mm (18 to 35 mesh) occupy at least 50% of the total particles and more preferably, particles having a particle size of 0.8 to 0.52 mm (22 to 30 mesh) occupy at least 65% of the total particles.

In the bag-shaped member of the coffee filter bag of the present invention, at least one fiber-fused area is formed on each of the front and back surface portions.

Referring to Fig. 6 illustrating a cross-section of the filter melt blown nonwoven fabric constituting the front and back surface portions of the bag-shaped member, at least one fiber-fuse-bonded area 12 is formed in the nonwoven fabric 11. Namely, a portion of the organic synthetic fibers integrated and interlaced in the nonwoven fabric is fuse-bonded to other portions of the fibers in the fiber fused-bonded area. Accordingly, movement or falling of the fibers, or contraction, elongation or other dimensional change of the nonwoven fabric, caused in hot water or during the extraction operation, can be controlled, and therefore, an uneven extraction or leaking of coffee powder can be prevented. Simultaneously, the strength of the bag-shaped member can be enhanced.

Furthermore, since this fiber fuse-bonded area can be made transparent, the extraction state in the coffee filter bag can be observed through this transparent area.

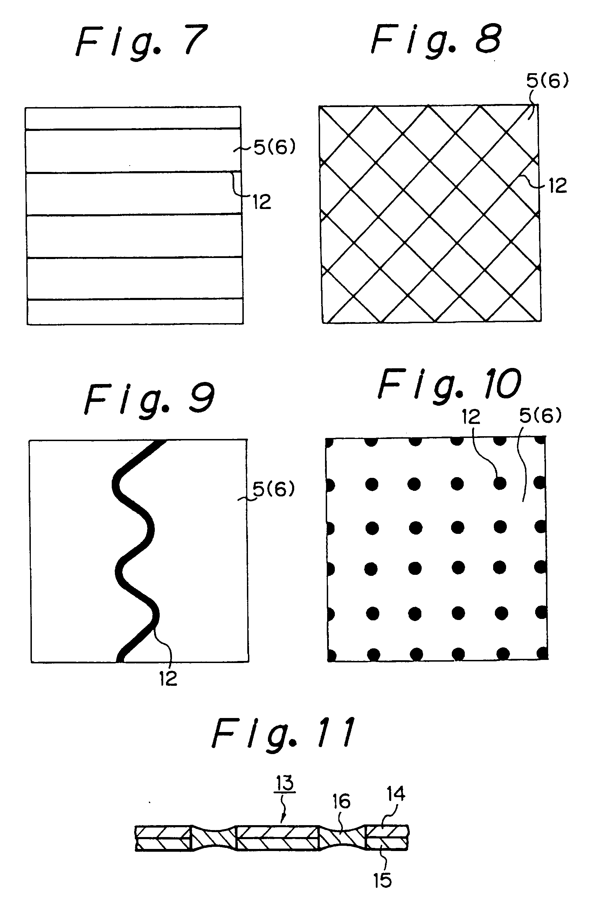

The number and shape of the fiber fuse-bonded areas formed on the front and back surface portions are not particularly critical, so far as the above-mentioned effects can be attained. For example, as shown in Fig. 4, many square fiber fuse-bonded areas can be regularly arranged at predetermined intervals. The fiber fuse-bonded area can have an optional shape, for example, a circular, elliptic, triangular or hexagonal shape. The dimension and arrangement can be appropriately changed. Furthermore, the fiber fuse-bonded areas can have such shapes and be arranged in the manners as shown in Figs. 7 through 10, and other optional shapes and arrangement manners can be adopted.

In each of the front and back surface portions of the bag-shaped member of the present invention, the ratio of the total area of the fiber fuse-bonded areas to the entire surface area is preferably at least 5%, more preferably 5 to 40%, still more preferably 6 to 30%.

Where a plurality of fiber fuse-bonded areas independent from one another are formed in the front or back surface portion, the area of each fiber fuse-bonded area is preferably at least 0.05 mm$^2$, more preferably 0.05 to 3 mm$^2$ (for example, 0.25 mm$^2$). Where the fiber fuse-bonded area has a linear shape, preferably the width of the fiber fuse-bonded area is at least 0.2 mm, more preferably about 0.2 to about 3 mm.

In accordance with another embodiment of the coffee filter bag of the present invention, each of the front and back surface portions is formed of a composite sheet material comprising a laminate of a fibrous filter layer and a supporting layer.

Referring to,Fig. 11, the composite sheet material 13 usable for the present invention is a laminate of one nonwoven fabric layer 14 for the fibrous filter layer and a nonwoven fabric layer 15 for the supporting layer, and both the nonwoven fabric layers 14 and 15 are bonded together by fiber fuse-bonded areas 16. The functional effect and mode of the fiber fuse-bonded area 16 are as mentioned above. If the fibrous filter layer and supporting layer are laminated and bonded together by the fiber fuse-bonded areas, the filtering effect is increased, the mechanical strength is increased and the clarity of the extract is improved.

The composite sheet material optionally comprises one or two sheets of the nonwoven fabric for the fibrous filter layer interposed between two sheets of the nonwoven fabric for the support layer, or one or two sheets of the nonwoven fabric for the support layer interposed between two sheets of the nonwoven fabric for the fibrous filter layer. Furthermore, the composite sheet material optionally comprises two sheets of the nonwoven fabric for the support layer and two sheets of the nonwoven fabric for the fibrous filter layer, laminated alternately or in other optional order.

In each case, the total basis weight of the composite sheet material is preferably 20 to 30 g/m$^2$, and the total thickness is preferably 0.1 to 0.2 mm.

For the production of the coffee filter bag of the present invention, the nonwoven fabric for the fibrous filter layer or the composite sheet material comprising the nonwoven fabric for the fibrous filter layer and the nonwoven fabric for the supporting layer is partially heated according to a predetermined pattern to form fiber fuse bonded areas. At this treatment, the fiber fuse-bonded areas can be made substantially transparent by controlling the degrees of heating and compression. The nonwoven fabric or composite sheet material having fiber fuse-bonded areas is cut into a predetermined size and formed into a bag-shaped member having a predetermined shape and one opening. A predetermined quantity of coffee is filled into the bag-shaped member through the opening, and then the opening is closed. At an optional step in the above-mentioned process, the hanging member is attached to the bag-shaped member.

When extraction is carried out by using the coffee filter bag of the present invention, the filter bag is put into a vessel (cup) and hot water is poured into the vessel, and the bag is swung in the cup by manipulating the hanging member, whereby a clear extract can be obtained within a short time.

The bag shaped member of the present invention was especially valuable as a coffee filter bag because it allows appropriate permeation of coffee fine particles and can adsorb and capture an oil and fat component appropriately. Accordingly, the filter bag makes it possible to prepare a high-quality coffee extract in a short time by a simple operation.

The coffee filter bag of the present invention comprises a bag-shaped member having front and back surface portions composed of the above-mentioned coffee filter material, and therefore, the coffee filter bag has a very high filtering effect, prevents a leakage of solid particles, and can adsorb and remove an extracted oil and fat component from the coffee extract. Moreover, since fiber fuse-bonded areas are formed in the front and back surface portions, dislocation or falling of the fibers in the filter material is prevented and the mechanical strength thereof is maintained at a high level.

Still further, by making the fiber fuse-bonded areas substantially transparent, it becomes possible to observe the extraction state in the bag and confirm the degree of the extraction.

Accordingly, by using the coffee filter bag of the present invention, a clear extract, free of an oil and fat component and solid fine powder, can be obtained in a short time at a high extraction efficiency from coffee in the bag.

EXAMPLES

The present invention will now be described in detail with reference to the following examples.

In the examples, the fine pore distribution in the nonwoven fabric and the adsorption of the coffee oil and fat component were determined by methods described below.

Method of Measuring Fine Pore Distribution

According to the mercury penetration method, mercury was forced into a specimen consisting of a nonwoven fabric, the amount of mercury penetrated into the specimen was measured_while changing the forcing pressure in the

range of $2.8 \times 10^3$ to $6.9 \times 10^7$ Pa (0.4 to 10,000 psi), and the pore distribution curve and the pore volume y (cm$^3$/g) were determined from the resultant data. The cumulative value of the pore volumes was calculated in order from the small pore radius side, and the maximum pore radius $r_{30}$ ($\mu$m), $r_{50}$ ($\mu$m) or $r_{70}$ ($\mu$m) corresponding to the cumulative pore volume value reached 0.3y, 0.5y or 0.7y was determined. Note, the contact angle and surface tension of mercury were regarded as 130° and 484 dyne/cm, respectively.

Method of Measuring Oil and Fat Component Adsorption

A nonwoven fabric specimen having an area of 100 cm$^2$ (10 cm x 10 cm) was attached to a stainless steel wire net and was obliquely fixed inside of a beaker having an inner volume of 1000 ml. The beaker was charged with a mixture of 400 ml of distilled water and 1.0 g of an oil and fat component extracted from coffee and the mixture in the beaker was heated on an electric heater to boil. Upon boiling, the oil and fat component on the surface of the mixture was circulated in the form of fine particles by convection and brought into contact with the nonwoven fabric specimen, whereby the fine particles of the oil and fat component were adsorbed on the nonwoven fabric specimen. This operation was carried out for 5 minutes to completely absorb the oil and fat component of coffee on the nonwoven fabric specimen. The nonwoven fabric specimen was taken out of the beaker and placed in an Erlenmeyer flask having an inner volume of 300 ml, and 100 ml of diethyl ether was added into the flask and the adsorbed oil and fat component was extracted in an ultrasonic washing device. The nonwoven fabric specimen was taken out of the flask and washed with diethyl ether. The diethyl ether fraction was dried with anhydrous sodium sulfate and then further dried under a reduced pressure. The isolated oil and fat component was weighed. The purity of the recovered oil and fat component was determined by comparing chromatograms obtained by using a column (Lichrsolb Si-60) having a diameter of 4.0 mm and a length of 25 cm.

The oil and fat component extracted from coffee, used at this experiment, was obtained by adding 1000 ml of diethyl ether to 150 g of medium-ground coffee powder, carrying out extraction for 2 hours, filtering the extract with a filter paper, removing the solvent by distillation under reduced pressure and purifying the residue by the silica gel chromatography using a mixed solvent consisting of ethyl ether and hexane in a mixing ratio of 2/8 by weight.

Example 1 and Comparative Example 1

In Example 1, a nonwoven fabric (consisting of split fibers, and, therefore, outside the scope of the present invention) for the fibrous filter layer, composed of polypropylene ultra-fine fibers having an average diameter of about 15 $\mu$m, was laminated with a nonwoven fabric for the supporting layer, composed of a fuse-bondable fibers comprising, as a main component a polyethylene resin, and both layers were partially fuse-bonded to each other to form a two-layer composite sheet.

The polypropylene fiber nonwoven fabric for the fibrous filter layer had the following properties.

Basis weight x : 18 g/m$^2$
Cumulative pore volume y: 6.8 cm$^3$/g
$r_{30}$: 9 $\mu$m
$r_{50}$: 18 $\mu$m
$r_{70}$: 35 $\mu$m
Oil and fat component adsorption: 2.75 g/g

The air permeability of the composite sheet was about 200 cm$^3$/cm$^2 \cdot$ sec.

A bag-shaped member for a coffee bag was prepared by using this composite sheet. The maximum size of fine particles in the fraction on the small particle side, which fraction occupied 50% of the total volume of coffee particles permeated through this filter bag, was about 10 $\mu$m.

The bag-shaped member was filled with 8 g of finely ground roasted coffee powder and the bag-shaped member was sealed to provide a coffee bag. A vessel was charged with the coffee bag and 150 ml of hot water at 95°C. The bag was shaken in hot water for 90 seconds. When the obtained coffee extract was observed, it was found that a precipitation of fine particles or floating of the oil and fat component did not occur, and the coffee extract had an appropriate concentration and flavor, and a high quality.

In Comparative Example 1, a nonwoven fabric composed of polypropylene fibers having an average diameter of 30 $\mu$m was prepared. This PP nonwoven fabric had an air permeability of 270 cm$^3$/cm$^2 \cdot$ sec.

The properties of this PP nonwoven fabric were as follows.

x: 20 g/m$^2$
y: 4.5 cm$^3$/g

$r_{30}$: 45 µm

$r_{50}$: 58 µm

$r_{70}$: 93 µm

Oil and fat component adsorption: 1.35 g/g

A coffee bag was prepared in the same manner as described in Example 1, and a coffee extract was prepared by using this coffee bag. The coffee extract had a concentration similar to that of the coffee extract obtained in Example 1, but-it was observed that the oil and fat component floated on the liquid surface, a large amount of precipitated fine particles were found on the bottom of the vessel, and thus the resultant coffee extract had a low quality. The amount of the precipitated fine particles was 350 mg and the particle size was distributed over a broad range of from 50 to 100 µm.

Examples 2 through 4 and Comparative Examples 2 through 4 (Example 4 is outside the scope of the present invention)

In Examples 2 to 4 and Comparative Examples 2 to 4, coffee filter bags were prepared by using coffee filter materials composed of nonwoven fabrics for the fibrous filter layer and nonwoven fabrics for the supporting layer, shown in Table 1. These coffee filter bags were compared with one another with respect to the coffee extracting performances thereof, in-the following manner.

Namely, 6 g of medium-ground coffee powder was filled in a bag-shaped member of 5 cm x 7 cm made from the filter material as shown in Table 1, and the bag-shaped member was sealed and a hanging string was attached to the bag-shaped member to form a coffee filter bag. A beaker having an inner volume of 200 ml was charged with the coffee bag, and about 15 ml of hot water at 95°C was poured into the beaker. The content in the beaker was steamed for 40 seconds, and then about 135 ml of hot water at 95°C was further poured into the beaker (the total amount of hot water became 150 ml) and the coffee bag was allowed to stand in the hot water for 50 seconds. The bag was vertically moved 15 times by using the hanging string, to extract the coffee. The bag was then taken out of the beaker, and the obtained coffee extract was evaluated with respect to the following items.

Extract Concentration:

A coffee extract was filtered through a membrane filter having an average pore size of 0.45 µm to remove fine particles from the coffee extract and the coffee concentration of the filtrate was determined by measuring the absorbance of the filtrate at a wavelength of 750 nm by using a spectrophotometer. A larger measured value indicates a higher concentration.

Transparency:

With respect to a coffee extract and a filtrate obtained by filtering this coffee extract by a membrane filter having an average pore size of 0.45 µm to remove fine particles of coffee, the absorbance (%) at a wavelength of 750 nm was measured by a spectrophotometer. The difference between the absorbances of both liquids was determined, and the transparency of the coffee extract was expressed by this difference. The larger the value of the difference, the larger the amount of floating fine particles, and the lower the transparency.

Precipitate:

A beaker charged with 150 ml of a coffee extract was allowed to stand for 5 minutes, and the dry weight (mg) of fine powder precipitated in the bottom was measured.

Floating Oil and Fat:

The spread of the oil and fat component floating on the surface was organoleptically evaluated. The specimen in which the oil and fat component was not substantially observed was evaluated as class 5, and the specimen in which the oil and fat component was floating over almost the entire liquid surface was evaluated as class 1. The degree of spread of the floating oil and fat component was evaluated in five classes based on these standard values.

The results of these tests are shown in Table 1.

Table 1

| Item | Nonwoven Fabric for Fibrous Filter Layer | | | | | | | Nonwoven Fabric for Supporting Layer | Quality of Coffee Extract | | | |
|---|---|---|---|---|---|---|---|---|---|---|---|---|
| Example No. | Material | Basis Weight (g/m²) | Cumulative Pore Volume (cm³/g) | $r_{30}$ (μm) | $r_{50}$ (μm) | $r_{70}$ (μm) | Oil and Fat Component Adsorption (g/g) | | Extract Concentration (%) | Transparency (%) | Precipitate (mg) | Floating Oil and Fat (class) |
| Example 2 | PPMB | 5 | 8.6 | 7 | 10 | 30 | 3.50 | (a) | 17 | 30 | 1.8 | 5 |
| Example 3 | PPMB | 13 | 8.9 | 6.7 | 9.6 | 24 | 3.75 | (b) | 16 | 22 | 0.5 | 5 |
| Example 4 | NyMB | 10 | 9.0 | 12 | 16 | 40 | 1.63 | (c) | 17 | 38 | 2.0 | 4 |
| Comparative Example 2 | NySB | 20 | 4.3 | 25 | 38 | 61 | 0.65 | not used | 14 | 72 | 86 | 3 |
| Comparative Example 3 | PPSB | 20 | 6.9 | 43 | 54 | 82 | 1.50 | not used | 17 | 80 | 124 | 3 |
| Comparative Example 4 | Pu/R/PP | 18 | 2.1 | 15 | 26 | 58 | 0.18 | not used | 16 | 46 | 17 | 2 |

10

Note:

Material

PPMB:  polypropylene melt-blow nonwoven fabric

NyMB:  nylon melt-blow nonwoven fabric

PPSB:  polypropylene spun-bond nonwoven fabric

NySB:  nylon spun-bond nonwoven fabric

Pu/R/PP:  pulp/rayon/polypropylene heat-bonded
          nonwoven fabric

Supporting Layer

(a):  polypropylene spun-bond nonwoven fabric

(b):  polyethylene heat-fusion-bonded nonwoven
      fabric

(c):  nylon spun-bond nonwoven fabric

## Claims

1. A bag-shaped member for a coffee filter bag comprising a layer of a filter melt blown nonwoven fabric (11, 14) composed of polypropylene fibers having an average diameter of 15 $\mu$m or less, wherein the filter melt blown nonwoven fabric satisfies the relationships (1) to (4):

$$3 \leq x \leq 30 \qquad (1)$$

$$y \geq 0.2x \qquad (2)$$

$$3 \leq r_{30} \qquad (3)$$

and

$$r_{70} \leq 50 \qquad (4)$$

wherein x represents a basis weight (g/m$^2$) of the filter melt blown nonwoven fabric, y represents a cumulative volume value (cm$^3$/g) of fine pores in the filter melt blown nonwoven fabric, determined by a mercury porosimeter, $r_{30}$ represents a radius ($\mu$m) of the fine pores observed when the volumes of the fine pores in the filter melt blown nonwoven fabric are cumulated from the small pore radius side and the cumulative volume value becomes equal to 0.3y, and $r_{70}$ represents a radius ($\mu$m) of the fine pores observed when the volumes of the fine pores in the filter melt blown nonwoven fabric are cumulated from the small pore radius side and the cumulative volume value becomes equal to 0.7y, and the filter melt blown nonwoven fabric is capable of adsorbing at least 0.5 g/g of an oil and fat component extracted from coffee in the wet state, **characterized in that** the bag-shaped member has confronting front and back surface portions (5, 6) comprising the layer of a filter melt blown nonwoven fabric (11, 14), a closed peripheral portion (7) and a top end portion, which top end portion is closed after coffee powder has been filled, wherein each of the front and back surface portions have a plurality of fiber-fuse-bonded areas (12) in which areas a portion of the polypropylene fibers in the filter layer is fuse bonded to other portions of the fibers in the filter layer.

2. The bag-shaped member for a coffee filter bag as claimed in claim 1, wherein the plurality of fiber-fuse-bonded areas have a total area corresponding to 5 to 40% of the total area of the filter layer.

3. The bag-shaped member for a coffee filter bag as claimed in claim 1 or 2, wherein each of the fiber-fuse-bonded areas has an area of 0.05 to 3 mm$^2$.

4. The bag-shaped member for a coffee filter bag as claimed in any of claims 1 to 3, wherein the fiber-fuse bonded areas are arranged at regular intervals.

5. The bag-shaped member for a coffee filter bag as claimed in any of claims 1 to 4, wherein the fiber-fuse-bonded areas are substantially transparent.

6. The bag-shaped member for a coffee filter bag as set forth in any of claims 1 to 5, wherein a supporting layer (15) comprising at least one sheet of a reinforcing fabric having no substantial influence on the filtering property of the filter nonwoven fabric layer, is laminated and combined with the filter nonwoven fabric layer (14) to form an integrated composite sheet material (13), and the front and back surface portions comprise the integrated composite sheet material.

7. The bag-shaped member for a coffee filter bag as set forth in claim 6, wherein the composite sheet material has an air permeability of 10 to 250 cm$^3$/cm$^2$ sec.

8. The bag-shaped member for a coffee filter bag as set forth in claim 6 or 7, wherein in the integrated composite sheet material (13) the filter melt blown polypropylene fiber nonwoven fabric layer having areas (12) in which a portion of the polypropylene fibers is fuse-bonded to other portions of the fibers, and the supporting layer are locally fuse-bonded to each other in a plurality of fiber-fuse-bonded areas (16) in which portions of the polypropylene fibers in the filter layer are fuse-bonded to each other and to the supporting layer.

9. A coffee filter bag comprising:

   a bag-shaped member (2) as set forth in any of claims 1 to 8;

   a coffee powder (3) contained in the bag-shaped member; and

   a hanging member (4) fixed on at least one end portion thereof to the bag-shaped member.

**Patentansprüche**

1. Beutelförmiges Teil für einen Kaffeefilterbeutel, das eine Schicht aus einem schmelzgeblasenen Filter-Faservlies (11, 14) aufweist, welches aus Polypropylen-Fasern mit einem durchschnittlichen Durchmesser von 15 µm oder weniger besteht, wobei das schmelzgeblasene Filter-Faservlies die Beziehungen (1) bis (4) erfüllt:

$$3 \leq x \leq 30 \tag{1}$$

$$y \geq 0{,}2x \tag{2}$$

$$3 \leq r_{30} \tag{3}$$

und

$$r_{70} \leq 50 \tag{4}$$

worin x das Basisgewicht (g/m$^2$) des schmelzgeblasenen Filter-Faservlieses, y den kumulativen Volumenwert (cm$^3$/g) der feinen Poren in dem schmelzgeblasenen Filter-Faservlies, bestimmt mit einem Quecksilber-Porosimeter, $r_{30}$ den Radius (µm) der feinen Poren, der beobachtet wird, wenn die Volumina der feinen Poren in dem schmelzgeblasenen Filter-Faservlies von der Seite des kleinen Porenradius her kumuliert werden und der kumulative Volumenwert gleich 0,3y wird, und $r_{70}$ den Radius (µm) der feinen Poren, der beobachtet wird, wenn die Volumina der feinen Poren in dem schmelzgeblasenen Filter-Faservlies von der Seite des Kleinen Porenradius her kumuliert werden und der kumulative Volumenwert gleich 0,7y wird, darstellt, und das schmelzgeblasene Filter-Faservlies in der Lage ist, mindestens 0,5 g/g der aus Kaffee im feuchten Zustand extrahierten Öl- und Fettkomponente zu adsorbieren, **dadurch gekennzeichnet**, daß das beutelförmige Teil gegenüberliegende vordere und hintere Oberflächenbereiche (5, 6), die die Schicht aus dem schmelzgeblasenen Filter-Faservlies (11, 14) enthalten, einen geschlossenen Randbereich (7) und einen oberen Endbereich besitzt, wobei der obere Endbereich nach dem Einfüllen des Kaffeepulvers verschlossen wird, wobei jeder der vorderen und hinteren Oberflächenbereiche eine Melarzahl an Flächenbereichen (12) mit Faser-Schmelzverbindung besitzt, wobei in den Flächenbereichen ein Teil der Polypropylen-Fasern in der Filterschicht an andere Teile der Fasern in der Filterschicht schmelzgebunden ist.

2. Beutelförmiges Teil für einen Kaffeefilterbeutel gemäß Anspruch 1, bei dem die Mehrzahl an Flächenbereichen mit Faser-Schmelzverbindung eine Gesamtfläche hat, die 5 bis 40% der Gesamtfläche der Filterschicht entspricht.

3. Beutelförmiges Teil für einen Kaffeefilterbeutel gemäß Anspruch 1 oder 2, bei dem jeder der Flächenbereiche mit Faser-Schmelzverbindung eine Fläche von 0,05 bis 3 $mm^2$ hat.

4. Beutelförmiges Teil für einen Kaffeefilterbeutel gemäß einem der Ansprüche 1 bis 3, bei dem die Flächenbereiche mit Faser-Schmelzverbindung in regelmäßigen Abständen angeordnet sind.

5. Beutelförmiges Teil für einen Kaffeefilterbeutel gemäß einem der Ansprüche 1 bis 4, bei dem die Flächenbereiche mit Faser-Schmelzverbindung im wesentlichen transparent sind.

6. Beutelförmiges Teil für einen Kaffeefilterbeutel gemäß einem der Ansprüche 1 bis 5, bei dem eine Stützschicht (15), die mindestens eine Lage eines verstärkenden Textilerzeugnisses ohne wesentlichen Einfluß auf die Filtereigenschaft der Filter-Faservlies-Schicht aufweist, mit der Filter-Faservlies-Schicht (14) zur Bildung eines zusammengesetzten Verbundlagenmaterials (13) laminiert und verbunden ist, und bei dem die vorderen und hinteren Oberflächenbereiche das zusammengesetzte Verbundlagenmaterial aufweisen.

7. Beutelförmiges Teil für einen Kaffeefilterbeutel gemäß Anspruch 6, bei dem das Verbundlagenmaterial eine Luftdurchlässigkeit von 10 bis 250 $cm^3/cm^2 \cdot s$ hat.

8. Beutelförmiges Teil für einen Kaffeefilterbeutel gemäß Anspruch 6 oder 7, bei dem in dem zusammengesetzten Verbundlagenmaterial (13) die schmelzgeblasene Filter-Polypropylenfaser-Vliesschicht mit Flächenbereichen (12), in denen ein Teil der Polypropylenfasern an andere Teile der Fasern schmelzgebunden ist, und die Stützschicht in einer Mehrzahl von Flächenbereichen (16) mit Faser-Schmelzverbindung, in denen Teile der Polypropylenfasern in der Filterschicht miteinander und mit der Stützschicht schmelzverbunden sind, örtlich miteinander schmelzverbunden sind.

9. Kaffeefilterbeutel, aufweisend:

ein beutelförmiges Teil (2) gemäß einem der Ansprüche 1 bis 8;

Kaffeepulver (3), das in dem beutelförmigen Teil enthalten ist; und

ein Aufhängeteil (4), das an mindestens einem seiner Endbereiche an dem beutelförmigen Teil befestigt ist.

**Revendications**

1. Elément en forme de sachet destiné à un sachet filtrant pour le café, comportant une couche d'un tissu non tissé fondu-soufflé filtrant (11, 14) composé de fibres de polypropylène ayant un diamètre moyen de 15 $\mu$m ou moins, dans lequel le tissu non tissé fondu-soufflé filtrant est conforme aux relations (1) à (4) :

$$3 \leq x \leq 30 \qquad (1)$$

$$y \geq 0.2x \qquad (2)$$

$$3 \leq r_{30} \qquad (3)$$

et

$$r_{70} \leq 50 \qquad (4)$$

où x représente le grammage (g/m$^2$) du tissu non tissé fondu-soufflé filtrant, y représente une valeur de volume cumulée (cm$^3$/g) de pores fins dans le tissu non tissé fondu-soufflé filtrant, déterminée par un porosimètre à mercure, r$_{30}$ représente un rayon ($\mu$m) des pores fins observé lorsque les volumes des pores fins dans le tissu non tissé fondu-soufflé filtrant sont cumulés en partant du côté des petits rayons de pores et lorsque la valeur de volume cumulée devient égale à 0,3y, et r$_{70}$ représente un rayon ($\mu$m) des pores fins observé lorsque les volumes des pores fins dans le tissu non tissé fondu-soufflé filtrant sont cumulés en partant du côté des petits rayons de pores et lorsque la valeur de volume cumulée devient égale à 0,7y, et le tissu non tissé fondu-soufflé filtrant est capable d'adsorber au moins 0,5 g/g d'un composant huileux et gras extrait du café à l'état humide,

caractérisé en ce que l'élément en forme de sachet présente des parties de surface avant et arrière en vis-à-vis (5, 6) comprenant la couche d'un tissu non tissé fondu-soufflé filtrant (11, 14), une partie périphérique fermée (7) et une partie supérieure extrême, laquelle partie supérieure extrême est fermée après remplissage par de la mouture de café, dans lequel chacune des parties de surface avant et arrière comporte plusieurs zones (12) collées par fusion de fibres, zones dans lesquelles une partie des fibres de polypropylène se trouvant dans la couche filtrante est collée par fusion à d'autres parties des fibres se trouvant dans la couche filtrante.

2. Elément en forme de sachet destiné à un sachet filtrant pour le café selon la revendication 1, dans lequel les plusieurs zones collées par fusion de fibres ont une surface totale correspondant à 5 à 40 % de la surface totale de la couche filtrante.

3. Elément en forme de sachet destiné à un sachet filtrant pour le café selon la revendication 1 ou 2, dans lequel chacune des zones collées par fusion de fibres présente une surface de 0,05 à 3 mm$^2$.

4. Elément en forme de sachet destiné à un sachet filtrant pour le café selon l'une quelconque des revendications 1 à 3, dans lequel les zones collées par fusion de fibres sont agencées à intervalles réguliers.

5. Elément en forme de sachet destiné à un sachet filtrant pour le café selon l'une quelconque des revendications 1 à 4, dans lequel les zones collées par fusion de fibres sont sensiblement transparentes.

6. Elément en forme de sachet destiné à un sachet filtrant pour le café selon l'une quelconque des revendications 1 à 5, dans lequel une couche porteuse (15) comprenant au moins une feuille d'un tissu de renfort n'ayant pratiquement aucun effet sur les propriétés filtrantes de la couche de tissu non tissé filtrante est stratifiée et combinée avec la couche de tissu non tissé filtrante (14) pour former un matériau composite en feuille intégré (13), et les parties de surface avant et arrière comprennent le matériau composite intégré en feuille.

7. Elément en forme de sachet destiné à un sachet filtrant pour le café selon la revendication 6, dans lequel le matériau composite en feuille présente une perméabilité à l'air de 10 à 250 cm$^3$/cm$^2$.s.

8. Elément en forme de sachet destiné à un sachet filtrant pour le café selon la revendication 6 ou 7, dans lequel, dans le matériau composite intégrée (13) en feuille, la couche filtrante en tissu non tissé en fibres de polypropylène fondues-soufflées ayant des zones (12) dans lesquelles une partie des fibres de polypropylène est collée par fusion à d'autres parties des fibres, et la couche porteuse, sont collées localement par fusion l'une à l'autre dans plusieurs zones (16) collées par fusion de fibres dans lesquelles des parties des fibres de polypropylène de la couche filtrante sont collées par fusion entre elles et à la couche porteuse.

9. Sachet filtrant pour le café comportant :

un élément (2) en forme de sachet selon l'une quelconque des revendications 1 à 8 ;
du café en poudre (3) contenu dans l'élément en forme de sachet ; et
un élément de suspension (4) fixé, au moins par l'une de ses parties extrêmes, à l'élément en forme de sachet.

Fig. 1

# Fig. 2

# Fig. 3

CUMULATIVE VOLUME (%)

SIZE OF COFFEE FINE PARTICLES (μm)

EP 0 411 546 B2

# Fig. 4

# Fig. 5

# Fig. 6

*F l g. 7*

*F l g. 8*

5(6)

12

5(6)

12

*F l g. 9*

*F l g. 10*

5(6)

12

12  5(6)

*F l g. 11*

13  16  14

15